Europäisches Patentamt

(19) European Patent Office

Office européen des brevets

(11) Publication number: **0 134 326**
**B1**

(12) **EUROPEAN PATENT SPECIFICATION**

(45) Date of publication of patent specification: **30.09.87**

(21) Application number: **83304710.3**

(22) Date of filing: **15.08.83**

(51) Int. Cl.⁴: **B 01 J 29/06**

(54) **Treatment of zeolites.**

(43) Date of publication of application:
**20.03.85 Bulletin 85/12**

(45) Publication of the grant of the patent:
**30.09.87 Bulletin 87/40**

(84) Designated Contracting States:
**BE DE FR GB IT NL SE**

(56) References cited:
**EP-A-0 022 640**
**US-A-3 933 983**
**US-A-4 054 511**
**US-A-4 073 865**
**US-A-4 358 397**
**US-A-4 361 713**
**US-A-4 374 296**

(73) Proprietor: **MOBIL OIL CORPORATION**
**150 East 42nd Street**
**New York New York 10017 (US)**

(72) Inventor: **Miale, Joseph Nicolas**
**25 Merritt Drive**
**Lawrenceville New Jersey 08648 (US)**
Inventor: **Chang, Clarence Dayton**
**11 Murray Place**
**Princeton New Jersey 08540 (US)**

(74) Representative: **Grundy, Derek George Ritchie et al**
**CARPMAELS & RANSFORD 43, Bloomsbury Square**
**London WC1A 2RA (GB)**

Courier Press, Leamington Spa, England.

**0 134 326**

**Description**

This invention relates to the treatment of zeolites to enhance their acid activity.

The ion exchange capacity of a crystalline aluminosilicate is directly dependent on its aluminum content: the more aluminum there is in a crystalline structure of the zeolitic kind, the more cations are required to balance the electronegativity thereof, and when such cations are of the acidic type, such as hydrogen, they impart high catalytic activity. On the other hand, highly siliceous zeolites having little or substantially no aluminum have many important properties and characteristics and a high degree of structural stability and have become candidates for use in various processes including catalytic processes. Materials of this type include highly siliceous zeolites such as ZSM-5 (US—A—3,702,886), ZSM-11 (US—A—3,709,979) and ZSM-12 (US—A—3,832,449) to mention a few.

The silica-to-alumina ratio of a zeolite is often variable; for example, zeolite X can be synthesized with a silica-to-alumina ratio of from 2 to 3 and zeolite Y from 3 to about 6. In some zeolites, however, the upper limit of silica-to-alumina ratio is virtually unbounded. Zeolite ZSM-5 is one such material, its minimum silica-to-alumina ratio being 5. US—A—3,941,871 discloses a crystalline zeolite essentially free of aluminum and exhibiting an x-ray diffraction pattern characteristic of ZSM-5. US—A—4,061,724, 4,073,865 and 4,104,294 describe microporous crystalline silicas or organo silicates of which the aluminium content is at impurity level.

Because of the extremely low aluminum content of these highly siliceous zeolites their ion exchange capacity is correspondingly low. Therefore, when exchanged and processed in a conventional manner they are not as catalytically active as their higher aluminum-containing counterparts.

The invention permits the preparation of catalysts from highly siliceous zeolites which have all the desirable properties inherently possessed by such materials yet have an acid activity which heretofore has only been manifested by materials having a higher aluminum content in their "as synthesized" form.

According to the invention the catalytic activity of a catalyst comprising a crystalline zeolite in a matrix, the zeolite having an ion exchange capacity less than 0.7 meq./g and constituting from 25 to 75% wt. of a composite with the matrix, is enhanced by contacting the catalyst with a monovalent fluoride in an aqueous medium and thereafter converting the zeolite to the protonated (i.e. hydrogen or hydronium) form. The matrix is an inorganic oxide, preferably alumina, silica, boria and/or gallia, and the conversion to the protonated form may be by hydrolysis or by ammonium exchange followed by calcination.

The invention is thus concerned with treatment of highly siliceous zeolites, particularly those of a silica-to-alumina ratio greater than 100, preferably greater than 500, up to and including those aforementioned highly siliceous materials where the silica-to-alumina ratio is infinity or as reasonably close to infinity as practically possible, prepared from reaction solutions which involve no deliberate addition of aluminum. Trace quantities of aluminum are usually present in such materials due to the impurity of the reaction solutions. The invention also embraces treatment of those zeolites which have lattice elements other than silica and/or alumina associated therewith, such as boron, iron, chromium, etc.

One procedure according to the invention is carried out by incorporating the crystalline zeolite into an alumina support matrix material and forming an extrudate of same, impregnating the extrudate under a vacuum (i.e. a pressure less than atmospheric pressure) with an aqueous solution of an alkali metal fluoride such as an aqueous solution of lithium fluoride, sodium fluoride, potassium fluoride, rubidium fluoride or cesium fluoride, the solution being from about 0.1 to about 2 Normal, the vacuum impregnation being conducted at a temperature of from about 0°C to about 100°C, preferably from about ambient to about 50°C. The impregnated extrudate is then contacted with a warm, i.e. ambient to 100°C, preferably 60°C to 80°C, aqueous solution of from 0.1 to 2 Normal ammonium salt, e.g. 1N $NH_4NO_3$, and thereafter calcined at a temperature of from about 200°C to about 600°C in an inert atmosphere of air, nitrogen, etc., at subatmospheric, atmospheric or superatmospheric pressures for from about 1 minute to about 48 hours.

The amount of alkali metal fluoride which is utilized is from about 0.05 to about 2 grams of alkali metal fluoride per gram of crystalline zeolite material in the extrudate.

The ammonium salt solution contacting step may be conducted for a period of time of from about 1 hour to about 20 hours. The ammonium salt used is not narrowly critical and will normally be an inorganic salt such as ammonium nitrate, ammonium sulfate, ammonium chloride, etc.

The support matrix material combined with the crystalline zeolite in the initial step may be in the form of a gel, if desired, and the relative proportion of zeolite component and support matrix material component, on an anhydrous basis, may vary with the zeolite content ranging from about 25 to 75 weight percent of the dry composite.

An alternative procedure is carried out by compositing the zeolite, either before or after ion exchange, with an alumina support matrix material and, in a preferred embodiment forming an extrudate of same, reacting the composite or extrudate with a dilute aqueous solution of hydrogen fluoride of from about 0.1 to about 5 Normal, the reaction being conducted at a temperature of from about 0°C to about 30°C, preferably at about ambient temperature, for a time of less than about 60 minutes, preferably from about 10 minutes to less than about 60 minutes. The hydrogen fluoride reacted composite or extrudate is dried, usually by heating to about 130°C, and then treated (1) by contact with an ammonium salt solution, e.g. 1N $NH_4NO_3$, (2) by hydrolysis and/or (3) by ammonolysis, and thereafter calcined at a temperature of from

2

about 200°C to about 600°C in an inert atmosphere of air, nitrogen, etc., at subatmospheric, atmospheric or superatmospheric pressures for from about 1 minute to about 48 hours.

The amount of hydrogen fluoride which is utilized is from about 0.02 to about 0.2 grams of hydrogen fluoride per gram of crystalline zeolite material in the composite or extrudate. A less than 5 weight percent HF solution is preferred.

If the treatment step following hydrogen fluoride reaction is an ammonium salt solution contacting step, it may be conducted for a period of time of from about 1 hour to about 20 hours at a temperature of from about 0°C to about 90°C. The ammonium salt used is not narrowly critical and will normally be an inorganic salt such as ammonium nitrate, ammonium sulfate, ammonium chloride, etc. If the ammonium salt solution is aqueous, it will be from about 0.1 to about 5 Normal, preferably about 1 Normal.

If the treatment step following hydrogen fluoride reaction involves hydrolysis, the extrudate will be contacted with water at a temperature of from about 20°C to about 550°C. When the hydrolyzing temperature is below 100°C, liquid water will be used. When the boiling point of water is exceeded, the extrudate may be purged with water saturated gas, e.g. helium.

If the treatment step following hydrogen fluoride reaction involves ammonolysis, the composite or extrudate will be contacted with 0.1 to 5 Normal ammonium hydroxide at a temperature of from about 0°C to about 90°C, or with moist or dry gaseous ammonia at a temperature of from about 50°C to about 200°C.

The support matrix material combined with the crystalline zeolite in the initial step of the present method may be in the form of a gel, if desired, and the relative proportion of zeolite component and support matrix material component, on an anhydrous basis, may vary with the zeolite content ranging from about 25 to about 75 weight percent of the dry composite. Extrusion of the composite is preferred at this point because it results in a more intimate mixture of components.

A further procedure in accordance with the invention is carried out by incorporating the zeolite into a matrix of alumina, an alumina-silica mixture, gallia or boria, reacting the composite with concentrated aqueous solution of an ammonium halide, preferably a fluoride of from about 1 Normal to saturated (about 12 Normal), the reaction being conducted at a temperature of from about 0°C to about 90°C, preferably from about ambient to about 50°C, for a time of less than about 60 minutes, preferably from about 10 minutes to less than about 60 minutes. The ammonium halide reacted composite is dried at about 110 to 130°C and then treated by contact with an ammonium salt solution, e.g. 1N $NH_4NO_3$, at from about 0° to about 90°C, and thereafter calcined at a temperature of from about 200°C to about 600°C in an inert atmosphere of air, nitrogen, etc., at subatmospheric, atmospheric or superatmospheric pressures for from about 1 minute to about 48 hours.

The amount of halide salt which is utilized is from about 0.1 to about 0.5 grams of halide per gram of crystalline zeolite material in the composite.

The treatment with the aqueous ammonium halide salt solution can be conducted for a period of time of from about 1 hour to about 20 hours. The ammonium salt used is not narrowly critical and will normally be an inorganic salt such as ammonium nitrate, ammonium sulfate, ammonium chloride, etc. The aqueous ammonium salt solution will be from about 0.1 to about 2 Normal.

The support matrix material combined with the crystalline zeolite in the initial step of the present method may be in the form of a gel, if desired, and the relative proportion of zeolite component and support matrix material component, on an anhydrous basis, may vary with the zeolite content ranging from about 25 to about 75 weight percent of the dry composite.

The fluoride employed according to the invention may take the form of a complex fluoroanion conforming to the formula:

$$L_{(n-m)}[MF_n]_e$$

wherein L is an organic or inorganic ionic moiety such as, for example, $(CH_3)_4N^+$, $Pt\ pyr_2(NH^4)_2^{-2}$, $NH_4^+$ or $Pt(NH_4)_4^{-2}$; $[MF_n]$ is a fluoroanion moiety comprising the element M; M is an element from Groups VB, VIB, VIIB, VIII, IIIA, IVA and VA of the Periodic Table of the Elements (Sargent-Welch Scientific Company) or a Rare Earth element, for example, boron, aluminum, gallium, silicon, phosphorous, antimony, bismuth, palladium, platinum, iridium, iron, rhenium, molybdenum and tantalum; n is the co-ordination number of M; m is the valence of M and e is the valence or charge associated with L. Non-limiting examples of the fluoroanion moiety include $BF_4^-$, $AlF_4^-$, $PF_6^-$, $BiF_4^-$, $AlF_5^{-2}$, $SiF_6^{-2}$, $SbF_5^{-2}$, $FeF_4^{-2}$, $PtF_6^{-2}$, $AlF_6^{-3}$, $TaF_8^{-3}$, and $PdF_7^{-3}$.

Non-limiting examples of the compounds having a complex fluoroanion of the above formula $L_{(n-m)}[MF_n]_e$ include:

ammonium tetrafluoroaluminate, ammonium hexafluorophosphate, ammonium tetrafluoro-bismuthate, ammonium pentafluoroaluminates, ammonium hexafluorosilicate, ammonium pentafluoroaluminates, ammonium hexafluorosilicate, ammonium pentafluoroantimonate, ammonium tetrafluoro-ferrite, ammonium octafluorotantalate, ammonium heptafluoropallidate, tetramethylammonium tetrafluoroborate, and ammonium tetrafluoroborate.

The reaction may be conducted in a solvent medium, i.e. solution, or as a solid-solid contact reaction and should be conducted at a temperature of from about −70°C to about 80°C and a pressure of from about −0.8 psig to about 50 psig (0.2 to 4.5 bar) The product zeolite may, if desired, be hydrolyzed by contact with water at a temperature of from about 20°C to about 550°C and/or contacted with an ammonium salt solution and calcined. If hydrolyzed and the hydrolyzing temperature is below 100°C at atmospheric pressure, liquid water may be used. When the boiling point of water is exceeded, such as when the hydrolyzing temperature exceeds 100°C at atmospheric pressure, the zeolite may be purged with water saturated gas, e.g. helium.

The ammonium salt solution contacting step may be conducted, if desired, with an aqueous or non-aqueous solution of an ammonium salt, e.g. $NH_4NO_3$, for a period of time of from about 1 hour to about 20 hours at a temperature of from ambient to about 100°C. The ammonium salt used is not narrowly critical and will normally be an inorganic salt such as ammonium nitrate, ammonium sulfate, ammonium chloride, etc. The hydrolysis and ammonium salt solution contacting steps, if conducted, may be conducted simultaneously when the ammonium salt solution is aqueous.

The zeolite treated in accordance with the present method may, thereafter, be calcined at a temperature of from about 200°C to about 600°C in an inert atmosphere of air, nitrogen, etc., for from about 1 minute to about 48 hours.

Of the zeolites advantageously treated in accordance herewith, zeolites ZSM-5, ZSM-11, ZSM-12, ZSM-23, ZSM-35, ZSM-38 and ZSM-48 are particularly noted. ZSM-23, -35, -38 and -48 are respectively defined by the x-ray data set forth in US—A—4,076,842, 4,016,245 and 4,046,859 and EP—A—15132. Many of these zeolites possess a constraint index within the range 1—12, a property which can be employed to define zeolites to which the invention is applicable.

The activity enhanced materials prepared according to the invention are useful as catalyst components for acid catalyzed organic compound conversion reactions. Such reactions include cracking of hydrocarbons, wherein the reaction conditions include a temperature of from about 350°C to about 600°C, a pressure of from about 0 to about 30 psia (0 to 2.07 bar), and a weight hourly space velocity of from about 0.1 to about 10; and conversion of methanol to gasoline, wherein the reaction conditions include a temperature of from about 400°C to about 500°C, a pressure of from about 0 to about 1000 psig (1 to 70 bar) and a weight hourly space velocity of from about 0.1 to about 20.

It may be useful to composite the above-described activity enhanced crystalline zeolite with a matrix resistant to the temperature and other conditions employed in a conversion process. Suitable matrix materials are well known in the art and are described in our EP—A—1695.

The following examples illustrate the present invention.

Example 1

Zeolite ZSM-5 prepared from a reaction mixture containing tetraalkylammonium ions and having a silica-to-alumina mole ratio of about 26,000:1 (65 ppm framework alumina, 110 ppm bulk alumina and 0.23 percent sodium) was composited and extruded with Kaiser gamma-alumina ($Al_2O_3$) to provide an extrudate of 65 wt.% ZSM-5 and 35 wt.% $Al_2O_3$, which was calcined for 30 minutes at 538°C. The calcined extrudate was vacuum impregnated with saturated aqueous sodium fluoride solution at a temperature of 25°C. After 30 minutes contact, the extrudate was dried at 130°C and then contacted three times at about 80°C with warm 1N $NH_4 NO_3$ solution (80°C). The extrudate was hot water washed after each contacting with the warm ammonium salt solution. The extrudate was dried at 130° and calcined for 30 minutes at 538°C and found to have an Alpha value of 70. The calcined extrudate subjected to impregnation had an Alpha value of less than 0.1.

Example 2

Example 1 was repeated, employing a zeolite prepared from a reaction mixture containing trimethyl [6-(trimethylarsonio)hexyl] ammonium ions and having a silica-to-alumina mole ratio of greater than about 500. The product exhibited an Alpha value of about 23.

As is known in the art, the Alpha value is an approximate indication of the catalytic cracking activity of the catalyst compared to a standard catalyst and it gives the relative rate constant (rate of normal hexane conversion per volume of catalyst per unit time). It is based on the activity of the highly active silica-alumina cracking catalyst taken as an Alpha of 1. The Alpha Test is described in The Journal of Catalysis, Vol. IV, pp. 522—529 (August 1965).

Example 3

A 0.6 gram sample of zeolite ZSM-5 having a silica/alumina mole ratio of about 26,000 (65 ppm framework alumina, 110 ppm bulk alumina and 0.23% sodium) was vacuum impregnated with 4 weight percent aqueous hydrogen fluoride (2 Normal) solution for reaction at a temperature of 25°C. After 30 minutes reaction time, the zeolite material was dried at 130°C and treated three times with 1N $NH_4NO_3$ solution, each treatment followed with water washing. The product was calcined at 538°C for 30 minutes in air.

Example 4

A 0.6 gram sample of pure gamma-alumina was reacted with hydrogen fluoride as in Example 3. A 0.3 gram portion of the hydrogen fluoride-reacted alumina was dried at 130°C and treated by hydrolysis by contact with liquid water at ambient temperature for 2 hours and then calcined at 538°C for 30 minutes.

Example 5

The remaining 0.3 gram portion of the hydrogen fluoride reacted alumina of Example 4 was dried at 130°C and treated with $NH_4NO_3$ as in Example 3. The alumina product of this example was calcined at 538°C for 30 minutes.

Example 6

An aliquot of 65 parts of the untreated zeolite of Example 3 was combined and extruded with 35 parts of pure gamma-alumina (the same alumina as used in Example 4). The extrudate was reacted with hydrogen fluoride as in Example 3, dried at 130°C and treated with 1N $NH_4NO_3$ solution three times followed each time by water washing. The extrudate product of this example was calcined for 30 minutes at 538°C.

A sample of each product from Examples 3 to 6 was subjected to the Alpha Test to measure catalytic activity. The results are listed below:

| Example | Product description | Alpha value |
|---|---|---|
| 3 | Untreated zeolite | 0.015 |
| 3 | Treated pure zeolite | 0.2 |
| 4 | Treated pure alumina (with hydrolysis) | 8 |
| 5 | Treated pure alumina (with ammonium salt treatment) | 10 |
| 6 | Treated extrudate (present method) | 101 |

Example 7

The untreated zeolite used in Example 2 was composited with alumina and reacted with hydrogen fluoride as in Example 3. The hydrogen fluoride reacted composite is dried at 130°C and hydrolyzed by contact with liquid water at ambient temperature for 2 hours and then treated by ammonolysis involving contact with ammonia at 150°C for 30 minutes. The final composite product is then calcined at 538°C for 30 minutes in air. The original pure zeolite of this example exhibits an Alpha value of less than 1, while the final calcined composite provides an Alpha value of about 100.

Example 8

Sixty-five parts of the untreated zeolite employed in Example 1 was combined and extruded with 35 parts of pure-alumina. A 0.6 gram sample of the extrudate was vacuum impregnated with a saturated solution of aqueous ammonium fluoride (approximately 12 Normal) for reaction at ambient temperature. After 30 minutes reaction time, the extrudate was dried at 130°C and treated three times with 1N $NH_4NO_3$ solution, each treatment followed with hot water washing. The extruded product was then calcined at 538°C for 30 minutes in air. The sample was tested for hexane cracking (the Alpha Test) and constraint index. Results are shown below:

| Catalyst evaluation | | |
|---|---|---|
| Sample | α | C.I. (650 F) |
| Starting extrudate | 0.2 | — |
| Final product | 140 | 3.9 |
| -Alumina | 0.2 | — |

Above results show enhanced Bronsted activity which can only result from addition of aluminum to the zeolite structure to create new acid sites.

The invention is adaptable to the regeneration of spent zeolite catalysts no longer useful in such processes as cracking or dewaxing. These catalysts ordinarily will have been sufficiently treated by combustion as to be substantially free of carbon deposits, but will nevertheless have lost their activity. These catalysts, including zeolite materials which have been composited with silica, alumina, silica-alumina mixtures as well as other previously described matrix mixtures are subjected to ammonium halide (preferably fluoride) treatment followed by ion exchange with an aqueous solution of ammonium salts as described previously.

5

Example 9

Untreated ZSM-5 as used in Example 8 was converted to NH$_4$-ZSM-5 by treating with 1.0 N NH$_4$NO$_3$ at ambient temperature. A 2 gram sample of extrudate comprising 65 parts of the NH$_4$-ZSM-5 and 35 parts of Kaiser gamma-alumina monohydrate was prepared by slurrying and extruding the components. The extrudate was then impregnated under vacuum (20 mm psia, −0.85 psig, 0.15 bar) and at a temperature of 25°C with a saturated aqueous solution of ammonium tetrafluoroborate (NH$_4$BF$_4$). After 30 minutes contact, the extrudate was dried at 130°C and treated twice with cold NH$_4$NO$_3$. It was then dried again, calcined at 538°C, refluxed for one hour with NO$_4$NO$_3$ and then washed with boiling water. The calcination and refluxing was repeated once more. The product was subjected to the Alpha Test to measure catalytic activity. A sample of extrudate similarly prepared but not contacted with the complex fluoroanion containing compound, was also tested for comparison purposes. The Constraint Index of the final product was also measured. The results of these tests are listed below:

|  | Alpha value | Constraint index |
| --- | --- | --- |
| Starting extrudate | 1 | — |
| Final product | 102 | 2.2 |

## Claims

1. A method of enhancing the activity of a catalyst comprising from 25 to 75% by weight of a crystalline zeolite having an ion exchange capacity less than 0.7 meq./g. and from 75 to 25% by weight of an inorganic oxide matrix, which method comprises contacting the catalyst with a monovalent fluoride in an aqueous medium and thereafter converting the zeolite in the catalyst to the protonated form.

2. A method according to Claim 1, wherein the matrix is alumina, silica, boria and/or gallia.

3. A method according to Claim 1 or Claim 2 wherein the contacting with the fluoride is carried out at a temperature of 0 to 100°C.

4. A method according to any preceding claim wherein the duration of said contacting is up to 1 hour.

5. A method according to any preceding claim wherein the concentration of the fluoride in said medium is 0.1 to 12N.

6. A method according to any preceding claim wherein the weight ratio of fluoride to zeolite during the contacting is 0.05 to 2.0.

7. A method according to any preceding claim wherein the fluoride is an alkali metal fluoride.

8. A method according to Claim 7 wherein the concentration of fluoride in said medium is 0.1 to 2N and the fluoride/Zeolite weight ratio is 0.05 to 2.0.

9. A method according to any of Claims 1 to 6 wherein the fluoride is hydrogen fluoride.

10. A method according to Claim 9 wherein the contacting is carried out at 0 to 30°C for from 10 to 60 minutes, the concentration of fluoride in the medium is 0.1 to 5N and the fluoride/Zeolite weight ratio is 0.02 to 0.2.

11. A method according to any of the Claims 1 to 6 wherein the fluoride is ammonium fluoride.

12. A method according to Claim 11 wherein the contacting is carried out at 0 to 90°C for from 10 to 60 minutes, the concentration of fluoride in the medium is 1 to 12N and the fluoride/zeolite weight ratio is 0.1 to 0.5.

13. A method according to any of Claims 1 to 6 wherein the fluoride is a compound possessing a complex fluoroanion.

14. A method according to any preceding claim wherein the zeolite is converted to the protonated form by ammonium exchange followed by calcination at 200 to 600°C.

15. A method according to any of Claims 1 to 13 wherein the zeolite is converted to the protonated form by hydrolysis at a tempeature of 20 to 550°C.

16. A method according to any preceding claim wherein the starting zeolite has a silica/alumina mole ratio greater than 100.

17. A method according to any preceding claim wherein the starting zeolite has a silica/alumina mole ratio greater than 500.

18. A method according to any preceding claim wherein the starting zeolite is one synthesised from a reaction mixture in which alumina is present only as an impurity.

19. A method according to any preceding claim wherein the starting zeolite contains lattice elements other than silicon and aluminum.

20. A method according to any of Claims 1 to 19 wherein the zeolite is ZSM-5, -11, -12, -23, -35, -38 or -48.

21. A method according to any of Claims 1 to 19 wherein the zeolite has a constraint index in the range 1 to 12.

22. Use of zeolites of enhanced activity, obtained by the method claimed in any preceding claim, as catalysts or catalyst components in the conversion of organic compounds.

6

**Patentansprüche**

1. Verfahren zur Erhöhung der Wirksamkeit eines Katalysators, der von 25—75 Gew.-% eines kristallinen Zeoliths mit einer Ionenaustauschkapazität von weniger als 0,7 Milliäquivalent/g und von 75—25 Gew.-% einer anorganischen Oxidmatrix umfaßt, bei dem der Katalysator mit einem einwertigen Fluorid in einem wässrigen Medium in Kontakt gebracht wird und danach der Zeolith im Katalysator in die protinierte Form umgewandelt wird.

2. Verfahren nach Anspruch 1, worin die Matrix Aluminiumoxid, Siliziumoxid, Boroxid und/oder Galliumoxid ist.

3. Verfahren nach Anspruch 1 oder 2, worin der Kontakt mit dem Fluorid bei einer Temperatur von 0 bis 100°C durchgeführt wird.

4. Verfahren nach Anspruch einem der vorstehenden Ansprüche, worin die Kontaktdauer bis zu einer Stunde beträgt.

5. Verfahren nach einem der vorstehenden Ansprüche, worin die Konzentration des Fluorids im Medium 0,1 bis 12 n beträgt.

6. Verfahren nach einem der vorstehenden Ansprüche, worin das Gewichtsverhältnis des Fluorids zum Zeolith während des Kontaktes 0,05 bis 2,0 beträgt.

7. Verfahren nach einem der vorstehenden Ansprüche, worin das Fluorid ein Alkalimetallfluorid ist.

8. Verfahren nach Anspruch 7, worin die Konzentration des Fluorids in dem Medium 0,1 bis 2 n beträgt und das Gewichtsverhältnis Fluorid/Zeolith 0,05 bis 2,0 beträgt.

9. Verfahren nach einem der Ansprüche 1 bis 6, worin das Fluorid Fluorwasserstoff ist.

10. Verfahren nach Anspruch 9, worin der Kontakt bei 0 bis 30°C während 10 bis 60 Minuten durchgeführt wird, die Konzentration des Fluorids im Medium 0,1 bis 5 n beträgt, und das Gewichtsverhältnis Fluorid/Zeolith 0,02 bis 0,2 beträgt.

11. Verfahren nach einem der Ansprüche 1 bis 6, worin das Fluorid Ammoniumfluorid ist.

12. Verfahren nach Anspruch 11, worin der Kontakt bei 0 bis 90°C während 10 bis 60 Minuten durchgeführt wird, die Konzentration des Fluorids im Medium 1 bis 12 n beträgt und das Gewichtsverhältnis Fluorid/Zeolith 0,1 bis 0,5 beträgt.

13. Verfahren nach einem der Ansprüche 1 bis 6, worin das Fluorid eine Verbindung ist, die ein Fluorkomplexanion besitzt.

14. Verfahren nach einem der vorstehenden Ansprüche, worin der Zeolith durch Ammoniumaustausch, gefolgt von Kalzinierung bei 200 bis 600°C in die protonierte Form umgewandelt wird.

15. Verfahren nach einem der Ansprüche 1 bis 13, worin der Zeolith durch Hydrolyse bei einer Temperatur von 20 bis 550°C in die protonierte Form umgewandelt wird.

16. Verfahren nach einem der vorstehenden Ansprüche, worin der Ausgangszeolith ein Siliziumdioxid/Aluminiumoxid-Molverhältnis von größer als 100 aufweist.

17. Verfahren nach einem der vorstehenden Ansprüche, worin der Ausgangszeolith ein Siliziumoxid/Aluminiumoxid-Molverhältnis von größer als 500 aufweist.

18. Verfahren nach einem der vorstehenden Ansprüche, worin der Zeolith ein solcher ist, der aus einer Reaktionsmischung synthetisiert ist, in der Aluminiumoxid nur als Verunreinigung vorhanden ist.

19. Verfahren nach einem der vorstehenden Ansprüche, worin der Ausgangszeolith Gitterelemente aufweist, die von Silizium und Aluminium verschieden sind.

20. Verfahren nach einem der Ansprüche 1 bis 19, worin der Zeolith ZSM-5, -11, -12, -23-, -35, -38 oder -48 ist.

21. Verfahren nach einem der Ansprüche 1 bis 19, worin der Zeolith einen Zwangsindex im Bereich von 1 bis 12 aufweist.

22. Verwendung der Zeolithe mit erhöhter Wirksamkeit, die nach einem Verfahren nach einem der vorstehenden Ansprüche erhalten wurden, als Katalysatoren oder Katalysatorkomponenten bei der Umwandlung organischer Verbindungen.

**Revendications**

1. Un procédé pour améliorer l'activité d'un catalyseur comprenant de 25 à 75% en poids d'une zéolite cristalline présentant une capacité d'échange ionique inférieure à 0,7 meq/g et contenant de 75 à 25% en poids des matrices ou supports à base d'un oxyde minéral, ce procédé consistant à mettre le catalyseur au contact d'un fluorure monovalent dans un milieu aqueux, puis à mettre ensuite sous forme protonée la zéolite du catalyseur.

2. Un procédé selon la revendication 1, dans laquelle la matrice ou support consiste en alumine, silice, oxyde de bore et/ou oxyde de gallium.

3. Un procédé selon la revendication 1 ou la revendication 2, dans laquelle le contact avec le fluorure est mis en oeuvre à une température comprise entre 0 et 100°C.

4. Un procédé selon l'une quelconque des revendications précédentes dans lesquelles la durée dudit contact peut atteindre une heure.

5. Un procédé selon l'une quelconque des revendications précédentes dans lesquelles la concentration de fluorure dudit milieu est de l'ordre de 0,1 à 12N.

6. Un procédé selon l'une quelconque des revendications précédentes dans lesquelles le rapport pondéral fluorure/zéolite durant la phase de contact est compris entre 0,05 et 2.

7. Un procédé selon l'une quelconque des revendications précédentes dans lesquelles le fluorure est un fluorure d'un métal alcalin.

8. Un procédé selon la revendication 7, dans laquelle la concentration en fluorure dudit milieu est de 0,1 à 2N et le rapport pondéral fluorure/zéolite est de 0,05 à 2,0.

9. Un procédé selon l'une quelconque des revendications 1 à 6, dans laquelle le fluorure consiste en acide fluorhydrique.

10. Un procédé selon la revendication 9, dans laquelle le contact est effectué à une température comprise entre 0 à 30°C pendant 10 à 60 mn, la concentration en fluorure du milieu réactionnel est compris entre 0,5 et 5N et le rapport pondéral fluorure/zeolite est compris entre 0,02 et 0,2.

11. Un procédé selon l'une quelconque des revendications 1 à 6, dans laquelle le fluorure consiste en un fluorure d'ammonium.

12. Un procédé selon la revendication 11, dans laquelle le contact est effectué à une température comprise entre 0 et 90°C pendant 10 à 60 mn, la concentration en fluorure du milieu réactionnel étant compris entre 1 et 12N et le rapport pondéral fluorure/zéolite étant compris entre 0,1 et 0,5.

13. Un procédé selon l'une quelconque des revendications 1 à 6, dans lesquelles le fluorure est un composé présentant un fluoro-anion complexe.

14. Un procédé selon l'uke quelconque des revendications précédentes, dans lesquelles la zéolite est convertie en forme protonée par échange avec l'ammonium suivi d'un calcination à une température comprise entre 200 et 600°C.

15. Un procédé selon l'une quelconque des revendications 1 à 13, dans lesquelles la zéolite est convertie en la forme protonée par hydrolyse à une température comprise entre 20 et 550°C.

16. Un procédé selon l'une quelconque des revendications précédentes, dans lesquelles la zéolite de départ présente un rapport molaire silice/alumine supérieur à 100.

17. Un procédé selon l'une quelconque des revendications précédentes, dans lesquelles la zéolite de départ présente un rapport molaire silice/alumine supérieur à 500.

18. Un procédé selon l'une quelconque des revendications précédentes, dans lesquelles la zéolite de départ est obtenue par synthèse à partir d'un milieu réactionnel dans lequel l'alumine n'est présente qu'à titre d'impureté.

19. Précédentes, dans lesquelles la zéolite de départ contient les éléments de réseau autres que le silicium et l'aluminium.

20. Un procédé selon l'une quelconque des revendications 1 à 19, dans lesquelles la zéolite consiste en ZSM-5, -11, -12, -23, -35, -38 ou -48.

21. Un procédé selon l'une quelconque des revendications 1 à 19, dans lesquelles la zéolite présente un indice de contrainte comprise entre 1 et 12 environ.

22. Application à des zéolites à activité améliorée obtenues par la méthode revendiquée selon l'une quelconque des revendications précédentes, en tant que catalyseur ou constituant catalytique pour la conversion de composés organiques.